# EUROPÄISCHE PATENTSCHRIFT

(11) **EP 4 277 830 B1**
(45) Veröffentlichungstag und Bekanntmachung des Hinweises auf die Patenterteilung: **08.04.2026**
(21) Anmeldenummer: 21798392.3
(22) Anmeldetag: 26.10.2021
(51) Int. Cl.: B62D 6/00, B62D 7/15, B62D 6/02

(54) **VERFAHREN SOWIE STEUERGERÄT ZUM BETREIBEN EINES AKTUATORS EINER STEER-BY-WIRE-LENKUNG EINES KRAFTFAHRZEUGS**
METHOD AND CONTROL APPARATUS FOR OPERATING AN ACTUATOR OF A STEER-BY-WIRE STEERING SYSTEM OF A MOTOR VEHICLE
PROCÉDÉ ET APPAREIL DE COMMANDE POUR FAIRE FONCTIONNER UN ACTIONNEUR D'UN SYSTÈME DE DIRECTION PAR CÂBLE D'UN VÉHICULE À MOTEUR

(30) Priorität: 15.01.2021 DE 102021200370
(43) Veröffentlichungstag der Anmeldung: 22.11.2023
(73) Patentinhaber: ZF Friedrichshafen AG, 88046 Friedrichshafen (DE)
(72) Erfinder: DASCH, Ingo, 82166 Gräfelfing (DE); VOGT, Dominik, 88074 Meckenbeuren (DE); RAU, Magnus, 73230 Kirchheim unter Teck (DE); DIEBOLD, Luc, 71106 Magstadt (DE); SPANGEMACHER, Björn, 71134 Aidlingen (DE)
(74) Vertreter: ZF Friedrichshafen AG
(86) Internationale Anmeldenummer: PCT/EP2021/079592
(87) Internationale Veröffentlichungsnummer: WO 2022/152417

(56) Entgegenhaltungen:
- EP-A2- 2 562 064
- DE-A1- 102012 206 025
- DE-A1- 102014 017 127
- DE-A1- 102017 206 701

## Beschreibung

Die Erfindung betrifft ein Verfahren zum Betreiben sowie eine Steuereinheit zum Steuern eines Aktuators einer steer-by-wire-Lenkung eines Kraftfahrzeugs. Des Weiteren betrifft die Erfindung eine steer-by-wire-Lenkung, welche mit einem solchen Verfahren betrieben wird, ein Computerprogramm zum Ausführen eines solchen Verfahrens sowie ein maschinenlesbares Speichermedium, auf dem ein solches Computerprogramm gespeichert ist.

Aus der DE 10 2014 206 934 A1 ist ein Aktuator mit einer ortsfest gelagerten Spindelmutter und eine axial gegenüber dieser verlagerbaren Spindel bekannt. Zumindest ein Ende eines solchen Aktuators, welcher in einer steer-by-wire-Lenkung Anwendung findet, ist mittels eines Lenkgestänges mit einem Radträger verbunden. Durch die lineare Verlagerung der Spindel kann so eine Änderung des Radlenkwinkels eines drehbar an dem Radträger gelagerten Rades erfolgen. Die von einer Lenkhandhabe wie z. B. einem Lenkrad zumindest mittelbar betätigbare oder unabhängig von dieser arbeitende steer-by-wire-Lenkung wird auf dem Signalwege, also ohne mechanische Kopplung angesteuert. Eine derartige Lenkung muss bei einem Lenkvorgang einen Reibungswiderstand der Räder gegenüber der Fahrbahn überwinden. Besonders bei sehr geringen Geschwindigkeiten beim Rangieren oder Parkieren bis zum Stillstand des Kraftfahrzeugs werden vergleichsweise hohe Lenkkräfte benötigt, die den Aktuator stark belasten. Es kann ein Spindeltrieb des Aktuators durch abwechselnde Haftreibung und Gleitreibung zu Resonanzschwingungen neigen und dessen Spindelantrieb hohe Temperaturen erlangen, welches zur Schädigung des Aktuators und somit der steer-by-wire-Lenkung führen kann.

Aus der DE 10 2014 017 127 A1 ist eine Steer-by-wire Lenkung bekannt, welche unterschiedliche Lenkübersetzungen vorgeben kann. Bei einer höheren Geschwindigkeit wird eine geringere Lenkübersetzung und somit auch ein kleinerer Lenkwinkelbereich eingestellt. Beim Fahrzeugstillstand oder bei reduzierten Fahrzeuggeschwindigkeiten wird eine Direktübersetzung vorgegeben, bei der der Lenkradeinschlag einen uneingeschränkten Fahrzeugradeinschlag bis zu einem Volleinschlag ermöglicht.

Vor diesem Hintergrund ist es eine Aufgabe der Erfindung, ein verbessertes Verfahren und eine verbesserte Steuereinheit zur Steuerung eines Aktuators einer steer-by-wire-Lenkung eines Kraftfahrzeuges anzugeben, wenn das Fahrzeug beim Parkieren bzw. Rangieren mit sehr niedriger Geschwindigkeit bewegt wird und sich erhöhte Vorspannungen zwischen Reifen und Fahrbahn ergeben.

Die Lösung vorstehender Aufgabe ist angegeben durch ein Verfahren mit den Merkmalen des Anspruchs 1, durch eine steer-by-wire-Lenkung mit den Merkmalen des Anspruchs 10, durch eine Steuereinheit mit den Merkmalen des Anspruchs 11, durch ein Computerprogramm mit den Merkmalen des Anspruchs 12 sowie durch ein maschinenlesbares Speichermedium mit den Merkmalen des Anspruchs 13. Vorteilhafte Weiterbildungen ergeben sich aus den Unteransprüchen.

Nach einem ersten Aspekt der Erfindung wird ein Verfahren zum Betreiben eines Aktuators einer steer-by-wire-Lenkung eines Kraftfahrzeuges bei einer im Vergleich zu einer normalen Fahrt sehr niedrigen Geschwindigkeit vom Stillstand bis zum Parkieren und/oder Rangieren angegeben, wobei das Verfahren zumindest folgende Schritte aufweist:
- Erfassen einer momentanen Geschwindigkeit des Kraftfahrzeugs
- Bestimmen eines begrenzten Lenkwinkels in Abhängigkeit von zumindest der Momentangeschwindigkeit
- Erfassen einer Lenkwinkelanforderung
- Ansteuern des Aktuators zum Einstellen eines Lenkwinkel zumindest eines Rades zumindest in Abhängigkeit der Lenkwinkelanforderung und unter Berücksichtigung des begrenzten Lenkwinkels, so dass Belastungen innerhalb des Aktuators aufgrund eines Aufbaus einer Vorspannung zwischen Reifen und Fahrbahn und/oder zwischen Aktuator und einem Lenkgestänge reduziert wird.

Ein Aktuator einer steer-by-wire-Lenkvorrichtung eines Kraftfahrzeuges weist bevorzugt ein Gehäuse auf, in welchem eine Spindel und eine drehbar sowie ortsfest angeordnete Spindelmutter gelagert ist. Die Spindel und die Spindelmutter bilden ein Bewegungsgewinde und sind innerhalb des Gehäuses Teil eines Spindelantriebs zum axialen Verlagern der Spindel gegenüber der Spindelmutter und somit auch dem Gehäuse. Die Spindel weist hierzu ein Außengewinde auf, welches mit dem Innengewinde der Spindelmutter in Eingriff ist. Wird die Spindelmutter drehangetrieben, z. B. durch einen Elektromotor, bevorzugt mittelbar durch ein Getriebe, vorzugsweise Riemengetriebe, so bedingt das Bewegungsgewinde, dass die Spindel axial entlang ihrer Längsachse gegenüber der Spindelmutter bzw. dem Gehäuse verlagert wird. Durch die axiale Verlagerung entlang ihrer Längsachse kann der Radlenkwinkel eines drehbar an einem Radträger angeordneten Rades geändert werden, welcher zumindest mittelbar mit einem Ende der Spindel verbunden ist.

Die beim Lenken erforderlichen hohen Stellkräfte bewirken in dem Getriebe des Aktuators, speziell in dem Bewegungsgewinde eines Spindeltriebs des Aktuators, eine hohe Reibung. Zwischen den Gewindeflanken innerhalb des Bewegungsgewindes, also zwischen Spindel und Spindelmutter, tritt auch bei Verwendung von optimierten Schmiermitteln hohe Reibung auf. Aufgrund der zwischen den Gewindepartnern auftretenden Haftreibung und Gleitreibung an den Kontaktflächen der aneinander liegenden Gewindeflanken kann es zu einem sogenannten Stick-Slip-Effekt kommen. Es handelt sich hierbei um das abwechselnde Haften und Gleiten der Gewindeflanken, welche zum einen zu schwankenden Drehmomenten zwischen der Spindelmutter und der Spindel führen kann. Hierbei kann beispielsweise die Spindel zu Schwingungen, insbesondere Drehschwingungen angeregt werden. Eine fortwährende oder temporäre Anregung über einen Mindestzeitraum kann bewirken, dass eine Resonanzfrequenz der Spindel oder anderer Bauteile in dem Aktuator erreicht wird. Des Weiteren bewirken die Schwingungen thermische Belastungen, welche die Schmiereigenschaft des Schmiermittels negativ belasten können. Dieses kann sich negativ auf die Lebensdauer des Aktuators auswirken.

Die vorgenannte Drehschwingung wird auch Torsionsschwingung genannt. Im Gegensatz zur translatorischen Schwingung erfolgt bei der Drehschwingung eine Schwingung um den rotatorischen Freiheitsgrad eines Systems, hier um die Längsachse der Spindel. In beiden Fällen handelt es sich um eine mechanische Schwingung.

Der Begriff Stick-Slip-Effekt (Haftgleiteffekt) leitet sich aus den beiden englischen Wörtern "stick" (haften) und "slip" (gleiten) ab. In der Physik und Technik beschreibt der Stick-Slip-Effekt ein in aller Regel unerwünschtes, ruckartiges Gleiten (Stillstand-Gleiten-Stillstand-Gleiten) von Festkörpern, die sich gegeneinander bewegen.

Bei einer steer-by-wire-Lenkvorrichtung handelt es sich um eine von der mechanischen Lenkung mit einer Lenkhandhabe, bspw. eines Lenkrads, entkoppelte Lenkvorrichtung. Die Lenkbewegung des Fahrers mittels Lenkhandhabe wird nicht auf mechanischem Wege, beispielsweise über ein Gestänge, auf die Radträger bzw. Räder übertragen. Vielmehr wird ein Lenkwinkel bzw. dessen Änderung für die jeweiligen Räder einer Achse z. B. in einer Steuereinheit berechnet, welches Stellsignale an den oder die Aktuatoren der steer-by-wire-Lenkvorrichtung sendet und letztlich die Lenkwinkeländerung bzw. Einstellung des Lenkwinkels an dem jeweiligen Rad bewirkt. Dabei kann die Lenkwinkelanforderung des Fahrers oder eine berechnete Lenkwinkeländerung einer Steuereinheit von dem maximal einstellbaren Lenkwinkel an der betreffenden Achse abweichen, z.B. größer sein. In diesem Fall kann höchstens der maximale Lenkwinkel eingestellt werden.

Die Lenkwinkelanforderung besteht aus der Änderung des Lenkwinkels von dem bestehenden Lenkwinkel auf einen beabsichtigten Lenkwinkel, wobei die Lenkwinkelanforderung ebenfalls in Abhängigkeit von der Zeit ist. Mit anderen Worten wird der Lenkwinkel innerhalb einer gewissen Zeitspanne geändert, welches als Lenkgeschwindigkeit oder auch als Lenkgradient bezeichnet wird. Als Beispiel sei hier genannt, dass ein Fahrer langsam, z.B. mit 2°/s, oder aber sehr zügig z.B. mit 20°/s an dem Lenkrad drehen kann, um eine Lenkwinkeländerung von z.B. 5° vorzunehmen. Mit anderen Worten wird zum einen die Änderung des Winkels als auch die Geschwindigkeit der Änderung des Winkels mit der Lenkwinkelanforderung erfasst.

Im Normalbetrieb einer Lenkvorrichtung werden größtenteils geringe Radlenkwinkeländerungen vorgenommen, wenn sich ein Fahrzeug mit einer Geschwindigkeit deutlich oberhalb des o.g. Bereichs einer Geschwindigkeit vom Stillstand bis zum Parkieren und/oder Rangieren bewegt, bspw. beim Fahren in einer geschlossenen Ortschaft, z.B. mit 30 bis 50 km/h oder auf einer Landstraße oder einer Autobahn mit noch größerer Geschwindigkeit. Dort ist in der Regel von Lenkwinkeln unterhalb 1° auszugehen. Für diese geringen Änderungen werden somit im Vergleich deutlich geringere Stellkräfte benötigt, so dass Drehschwingungen nicht auftreten.

Der hier vorgestellte Ansatz basiert auf der Erkenntnis, dass in bestimmten Situationen ein erhöhtes Drehmoment bzw. eine erhöhte Kraft zum Lenken oder mit anderen Worten zum Einschlagen des jeweiligen Rades in einen gewünschten Lenkwinkel bzw. Radlenkwinkel erforderlich ist. Die hier betrachtete Situation geht von einer sehr geringen Geschwindigkeit des Fahrzeuges vom Stillstand bis zum Parkieren und/oder Rangieren aus. Bei einem völligen Stillstand ist die Geschwindigkeit gleich 0 km/h. Beim Parkieren und/oder Rangieren wird hier von einer Geschwindigkeit kleiner oder gleich etwa 1 km/h ausgegangen. In einem Geschwindigkeitsbereich von 0 bis etwa 1 km/h werden besonders hohe Kräfte zum Einschlagen des gewünschten Lenkwinkels benötigt. Je geringer die Geschwindigkeit je größer sind dabei die zu erwartenden Lenkkräfte, welche durch den Aktuator der steer-by-wire-Lenkung bewerkstelligt werden müssen. Dieses liegt darin begründet, dass die gesamte Gewichtskraft des Fahrzeugs auf den Reifen lastet, welche auf den Rädern montiert sind. Der Kontakt zwischen Reifen und Fahrbahn ergibt sich aus der Reifenaufstandsfläche. Die Größe der Aufstandsfläche eines Reifens hängt in erster Linie von der Radlast und vom Reifendruck ab, weil der Innendruck des Reifens den Großteil der Radlast trägt. Aber auch die Reifenbreite, der Reifendurchmesser und die Steifigkeit der Seitenwand spielen eine Rolle. Es wird bei sich nicht drehendem Rad eine höhere Kraft zum Lenken, also zum Drehen des Rades um seine Hochachse benötigt, als wenn das Rad aufgrund der Fahrzeugbewegung rollt. Mit zunehmender Rollbewegung wird jeweils weniger Kraft zum Lenken benötigt. Es ist ersichtlich, dass neben der Fahrzeugmasse auch die Temperatur der Umgebung sowie die Reifentemperatur einen Einfluss haben, da sie sich unmittelbar auf die Reibung zwischen Reifen und Fahrbahnoberfläche auswirken. Nicht erschöpfend seien hier folgende weitere Parameter genannt: Reifenmischung, Reifenart, Reifenreibkennwert, Fahrbahnbelag sowie Fahrbahnbeschaffenheit (trocken, feucht, glatt etc.).

Der Reifen eines Rades ist in der Regel aus Gummi - einem elastischen Werkstoff. Wirkt nun eine Kraft zum Lenken des Rades von dem Aktuator einer steer-by-wire-Lenkung auf das Rad, so ergibt sich eine Vorspannung aufgrund der Haftreibung bzw. Gleitreibung zwischen Reifen und Fahrbahnoberfläche. Der Reifen wird quasi gegenüber der Fahrbahn aufgezogen und somit vorgespannt. Weitere Vorspannung ergibt sich zwischen Aktuator und Radträger durch zwischen diesen eingesetzte Lager sowie ggfs. Lenker, wie zum Beispiel einem Lenkgestänge, je nach Ausbildung des Fahrwerks.

Wird nun in dem vorgenannten geringen Geschwindigkeitsbereich durch die steer-by-wire-Lenkung von einem großen, bevorzugt von einem maximal möglichen Lenkwinkel ausgehend auf einen kleineren Lenkwinkel zurückgelenkt, so werden die Vorspannungen zunächst kurzzeitig reduziert und es ergeben sich erneut Vorspannungen. Diese Vorspannung nimmt zu, je geringer die Geschwindigkeit des Fahrzeugs ist bzw. wenn diese vom Rollen zu Stillstand hin reduziert wird. Beim Parkieren und/oder Rangieren ist das quasi in ständigem Wechsel der Fall. Beim Zurücklenken aus dem zuvor eingestellten großen Lenkwinkel kommt es zu einem Kraftrichtungswechsel in dem Aktuator der steer-by-wire-Lenkung. Dieses führt zu einem Lastwechsel innerhalb eines Getriebes bzw. Spindeltriebes des Aktuators, so dass es wiederum zu einem geänderten Stick-Slip-Verhalten kommt. Dieses kann zu Schwingungen und hohen thermischen Belastungen innerhalb des Aktuators bzw. dessen Bewegungsgewinde führen. Dieses Verhalten gilt es zu reduzieren bzw. zu minimieren.

Mit großen Lenkwinkeln sind hier Lenkwinkel gemeint, welche in den Bereich der konstruktiv möglichen maximalen Lenkwinkel der jeweiligen Achse reichen. Beim Rangieren oder Parkieren wird zudem mit häufig wechselnden Lenkwinkeln gearbeitet. Durch Ausnutzung großer, vorzugsweise der größtmöglichen, Lenkwinkel ist ein einfacheres Einfahren in z.B. eine Parklücke oder auch Rangieren mit einem Anhänger möglich. Besonders vorteilhaft ist es, wenn neben der Vorderachse auch die Hinterachse des Kraftfahrzeuges lenkbar ist.

Gemäß der Erfindung wird in dem vorgenannten Verfahren in Abhängigkeit der momentanen Geschwindigkeit des Kraftfahrzeugs der maximal mögliche Lenkwinkel auf einen begrenzten Lenkwinkel limitiert. Durch die Limitierung des Lenkwinkels wird dem Problem begegnet, dass sich beim Lenken in dem vorgenannten geringen Geschwindigkeitsbereich eine übermäßige Vorspannung aufbaut. Wird im Schritt des Erfassens einer Lenkwinkelanforderung ein Lenkwinkel angefordert, welcher größer als der begrenzte momentane Lenkwinkel ist, so kann maximal nur der momentan begrenzte Lenkwinkel eingestellt werden. Der Aktuator der steer-by-wire-Lenkung kann einen Lenkwinkel im Schritt des Ansteuerns lediglich in Abhängigkeit der Lenkwinkelanforderung und unter Berücksichtigung des begrenzten Lenkwinkels einstellen. Es kann somit jeder Lenkwinkel eingestellt werden, wenn dieser Lenkwinkel kleiner oder gleich des zuvor bestimmten begrenzten Lenkwinkels ist. Das Ansteuern des Aktuators erfolgt vorzugsweise durch eine Steuereinheit wie ein Steuergerät oder eine Steuerung. Die Steuerung bzw. das Steuergerät ist bevorzugt Teil der steer-by-wire-Lenkung. Die Ansteuerung des Aktuators kann jedoch auch mittels eines weiteren im Fahrzeug verbauten Steuergerätes bewerkstelligt werden.

In vorteilhafter Weise kann durch die Erfindung ohne Änderung eines bestehenden Aktuators einer steer-by-wire-Lenkvorrichtung mittels verfahrensgemäßer Ansteuerung eine Minimierung des Schwingverhaltens des Aktuators bzw. der darin verbauten Bauteile bewirkt werden.

In einer bevorzugten Ausführungsform kann im Schritt des Bestimmens der begrenzte Lenkwinkel auf einen Wert kleiner einem vordefinierten maximalen Lenkwinkel geändert werden. Diese Überlegung berücksichtigt, dass sich ein vordefinierter maximaler Lenkwinkel, welcher konstruktiv mit der steer-by-wire-Lenkung in dem jeweiligen Kraftfahrzeug möglich ist, aufgrund von Randbedingungen, wie den vorgenannten Bedingungen hinsichtlich der Vorspannung, ändern kann. Der konstruktiv maximal mögliche Lenkwinkel kann z.B. auch deshalb nicht sinnvoll möglich sein, weil eine abweichende Reifengröße, z.B. breitere Reifen oder Schneeketten an der lenkbaren Achse verwendet werden. Auch kann aufgrund einer starken Beladung des Fahrzeugs der konstruktiv maximal mögliche Lenkwinkel nicht einstellbar sein, weil beim Eintauchen der Räder weniger Raum für Lenkbewegungen zur Verfügung steht. Es wird mit dieser Ausführungsform somit jede Fahrzeugsituation berücksichtigt, so dass es zu keiner Kollision der Räder bzw. Reifen mit dem Fahrwerk oder dem Fahrzeugaufbau aufgrund eines zu großen Lenkwinkel kommen kann.

Bevorzugt wird im Schritt des Bestimmens der begrenzte Lenkwinkel aufgrund einer Kennlinie festgelegt. Durch die Kennlinie kann festgelegt sein, dass der begrenzte Lenkwinkel 50-80 %, vorzugsweise 70 % des vordefinierten maximalen Lenkwinkels beträgt. Beträgt beispielsweise bei einer als steer-by-wire-Lenkung ausgebildeten Hinterachslenkung der maximal mögliche Lenkwinkel 10°, so kann der begrenzte Lenkwinkel aufgrund der Kennlinie 5-8°, vorzugsweise maximal 7° betragen. Für verschiedene Fahrzeugsituationen können unterschiedliche Kennlinien festgelegt sein. Beispielsweise können die Kennlinien von einer Einheit in einer Steuereinheit gewählt werden, welche dort gespeichert sind. Die Kennlinien werden bevorzugt gewählt in Abhängigkeit von der momentanen Geschwindigkeit des Fahrzeugs, der Lenkwinkelanforderung, unter Berücksichtigung des begrenzten Lenkwinkels sowie der verwendeten Reifengröße oder - art oder vom Beladungszustand oder weiteren Bedingungen. Dabei können eine oder mehrere Parameter ausschlaggebend sein.

Das Verfahren basiert grundsätzlich auf der Bestimmung des Lenkwinkels in Abhängigkeit von der momentanen Geschwindigkeit des Kraftfahrzeuges. Im Wesentlichen wird dabei unterschieden, ob das Fahrzeug mit sehr geringer Geschwindigkeit (Geschwindigkeit vom Stillstand bis zum Parkieren und/oder Rangieren, siehe oben) oder aber darüber hinaus bewegt wird. Bevorzugt wird im Schritt der Bestimmens des begrenzten Lenkwinkels ein erster Lenkwinkelbereich von 0° bis kleiner oder gleich des begrenzten momentanen Lenkwinkels und ein zweiter Lenkwinkelbereich größer des begrenzten momentanen Lenkwinkels bis zu dem vordefinierten maximalen Lenkwinkel festgelegt und bevorzugt in einer Steuerung gespeichert. Dabei kann der einzustellende Lenkwinkel bei einer Geschwindigkeit des Kraftfahrzeugs in einem ersten Geschwindigkeitsbereich vom Stillstand bis zu einer ersten Geschwindigkeit jeden Wert in dem ersten Lenkwinkelbereich annehmen. Die erste Geschwindigkeit weist hierbei vorzugsweise einen Wert aus einem Bereich von 0,5 bis 1 km/h, vorzugsweise etwa 0,7 km/h, höchst vorzugsweise genau 0,7 km/h auf. Mit anderen Worten kann der Aktuator jeden Lenkwinkel im Bereich zwischen 0° und dem begrenzten Lenkwinkel einstellen, wenn sich das Fahrzeug im Stillstand befindet bzw. mit einer Geschwindigkeit bewegt wird, welche von 0 km/h (Stillstand) bis maximal der ersten Geschwindigkeit betragen kann. Eine zu hohe Belastung des Aktuators wird damit minimiert.

Ein Lenkwinkel von 0° wird auch als Mittenposition oder Neutrallenkwinkel bezeichnet und entspricht der Geradeausfahrt eines Fahrzeugs, wenn an jeder gelenkten Achse ein Lenkwinkel von 0° eingestellt ist. Die Räder sind dabei parallel zur Längsrichtung des Fahrzeugs ausgerichtet.

Möglich ist auch eine weitere Ausführungsform, dass nach einer Fahrt mit einer Geschwindigkeit größer der ersten Geschwindigkeit in den ersten Geschwindigkeitsbereich zurückgekehrt und in diesem verblieben wird. Das Fahrzeug bewegt sich dann mit der geringeren Geschwindigkeit vom Stillstand bis z.B. 0,7 km/h und verfahrensgemäß würde in Abhängigkeit der momentanen Geschwindigkeit ein begrenzter Lenkwinkel bestimmt. Bevorzugt wird bei Rückkehr aus der höheren Geschwindigkeit in den ersten Geschwindigkeitsbereich dieser zuletzt eingestellte größte Lenkwinkel als neuer begrenzter Lenkwinkel festgelegt. Dieses liegt darin begründet, dass sich aufgrund der zuvor vorhandenen größeren Geschwindigkeit beim Einstellen des Lenkwinkels keine Vorspannung aufgebaut hat. War aufgrund des vordefinierten maximalen Lenkwinkels maximal ein Lenkwinkel von 10° möglich und in dem ersten Geschwindigkeitsbereich ein begrenzter Lenkwinkel von 7° bestimmt, so könnte außerhalb des ersten Geschwindigkeitsbereiches ein Lenkwinkel von 7,5° eingestellt worden sein. Wird nun in den ersten Geschwindigkeitsbereich zurückgekehrt so wird in dieser Ausführungsform der neue begrenzte Lenkwinkel mit 7,5° festgelegt und beibehalten.

Wurde gemäß der vorherigen Ausführung der Lenkwinkel aufgrund der Rückkehr in den ersten Geschwindigkeitsbereich beibehalten und aufgrund einer erneuten Lenkwinkelanforderung ein Lenkwinkel größer 50-80 %, vorzugsweise 70 % angefordert, so kann maximal ein Lenkwinkel im Bereich größer 50-80 %, vorzugsweise 70 % des vordefinierten maximalen Lenkwinkels bis zum beibehaltenen begrenzten Lenkwinkel eingestellt werden. Beispielsweise kann nach Rückkehr in den ersten Geschwindigkeitsbereich, also beispielsweise dem Stillstand des Fahrzeuges und bei einer Anforderung eines Lenkwinkels größer 7° nur ein Winkel zwischen dem beibehaltenen Wert, z.B. 7,5° und 7° eingestellt werden. Mit anderen Worten kann in dieser Ausführungsform der maximal einstellbare Lenkwinkel nicht größer als der beibehaltene Lenkwinkel aus der vorherigen Fahrt mit größerer Geschwindigkeit sein. Diese erweiterte Begrenzung liegt darin begründet, dass bei einer Vergrößerung des Lenkwinkels größer des beibehaltenen Wertes sich erneut eine ungünstige zu große Vorspannung aufbauen würde, weil das Kraftfahrzeug in dem niedrigen Geschwindigkeitsbereich bewegt wird. In dem Bereich von 7 bis 7,5° kommt es nicht zu einer derartigen Vorspannung, wie überraschend festgestellt wurde.

Bevorzugt wird bei einer Geschwindigkeit größer der ersten Geschwindigkeit der begrenzte Lenkwinkel aufgehoben. Es ist somit möglich, dass nach Erfassen der Lenkwinkelanforderung im Schritt des Ansteuerns des Aktuators ein Lenkwinkel bis zum vordefinierten maximalen Lenkwinkel eingestellt werden kann. Oberhalb der ersten Geschwindigkeit ist die Geschwindigkeit des Kraftfahrzeugs bzw. die Raddrehzahl so groß, dass sich bei dem Reifen gegenüber der Fahrbahn und auch in Lagern oder Lenkern, wie zum Beispiel dem Lenkgestänge keine bzw. keine nachteilige Vorspannung aufbaut.

Wird das Fahrzeug mit einer niedrigen Geschwindigkeit, also in dem ersten Geschwindigkeitsbereich bewegt, so wird bevorzugt auch die Lenkgeschwindigkeit, welche durch einen Lenkgradienten ausgedrückt wird, angepasst, vorzugsweise reduziert. Die Lenkgeschwindigkeit wird beispielsweise in Grad pro Sekunde als Parameter berücksichtigt. Die Lenkgeschwindigkeit in dem ersten Geschwindigkeitsbereich von Stillstand bis zu maximal 1 km/h, vorzugsweise 0,7 km/h kann beispielsweise in einem Bereich von 0-12°/s liegen. Oberhalb der ersten Geschwindigkeit kann der Lenkgradient konstruktiv zulässig ansteigen, beispielsweise auch in einem Bereich von 12 bis 18°/s liegen. Der Lenkgradient wird in Abhängigkeit von der Lenkwinkelanforderung angepasst, so dass eine Lenkwinkeländerung entsprechend der zeitlichen Anforderung vorgenommen werden kann.

Damit es bei Verlassen des ersten Geschwindigkeitsbereiches, bei der es zu einer Aufhebung des begrenzten Lenkwinkels kommt, und zunehmender Geschwindigkeit, vorzugsweise einer starken Zunahme der Geschwindigkeit, wie z.B. bei einer plötzlichen hohen Beschleunigung des Fahrzeuges, nicht zu einer schlagartigen Lenkbewegung kommt, wird mit zunehmender Geschwindigkeit ein hartes Umschalten von dem begrenzten auf den maximalen Lenkwinkel vermieden. Es wird bevorzugt in Abhängigkeit der momentanen Geschwindigkeit und/oder der Beschleunigung sowie der Lenkwinkelanforderung eine allmähliche Anpassung des begrenzten Lenkwinkels von z.B. 7° auf den maximalen Lenkwinkel von 10° vorgenommen. Die vorgenannten Randbedingungen z.B. hinsichtlich der Beladung des Fahrzeugs werden dabei bevorzugt berücksichtigt. Zur Vermeidung einer sprunghaften Lenkwinkeländerung wird hierzu der Lenkgradient auf ein für den Fahrer des Fahrzeugs beherrschbares Maß angepasst, wobei hier unterschiedliche Fahrmodi, z.B. Ecofahrt oder Sportfahrt etc., berücksichtigt werden können. Bevorzugt erfolgt die Anpassung mittels zumindest einer Kennlinie. Der Lenkgradient kann dabei abhängig von der Geschwindigkeit des Fahrzeugs z.B. 4°/s bei 0 km/h (Fahrzeugstillstand), 2°/s bei 10km/h und 0,25°/s bei 250km/h betragen. Die zumindest eine Kennlinie wirkt sich somit auf die Stellgeschwindigkeit des Aktuators aus und es wird die durch diesen mögliche Lenkwinkeländerung fließend angepasst, so dass es nicht zu einer schlagartigen Lenkwinkeländerung kommt, sondern ein möglichst unmerklicher Übergang erzielt wird. Das ist von Vorteil mit Blick auf Fahrsicherheit und Fahrkomfort.

In einer weiteren bevorzugten Ausführungsform wird in Abhängigkeit von der momentanen Geschwindigkeit vom Stillstand bis zum Parkieren und/oder Rangieren im Schritt des Bestimmens des begrenzten Lenkwinkels eine Beschleunigung einer Antriebseinheit des Aktuators geändert, bevorzugt reduziert. Die Änderung erfolgt zumindest temporär, wobei die Beschleunigung vorzugsweise reduziert wird. Damit können die vorgenannten Belastungen des Aktuators reduziert werden, welche bei großen Lenkwinkeln auftreten können. Bei mittleren und kleineren Lenkwinkeln ist somit eine höhere bzw. die maximale Beschleunigung des Antriebs des Aktuators der steer-by-wire-Lenkung möglich. Für unterschiedliche Lenkwinkelbereiche können unterschiedliche limitierte Beschleunigungen festgelegt werden, bevorzugt anhand zumindest einer Kennlinie. Die Beschleunigungslimitierung hat den Vorteil, dass der Aktuator zunächst langsamer anläuft und die Belastungen niedrig hält. Es wird nach dem langsamen Anlaufen nach Möglichkeit bevorzugt auf einen höheren Lenkgradienten beschleunigt, so dass gemäß der Lenkwinkelanforderung die Lenkwinkeländerung in der gleichen Zeit erfolgt, als wenn die Beschleunigung nicht limitiert würde.

Die Erfindung betrifft des Weiteren eine steer-by-wire-Lenkung mit einem Aktuator, welche nach der vorgenannten Verfahrensschritten betrieben wird. Besonders vorteilhaft ist eine Ausführungsform, bei der im Schritt des Ansteuerns ein Aktuator einer lenkbaren Hinterachse des Kraftfahrzeugs zugeordneten Lenkung angesteuert wird. Wird an der Hinterachse ein Lenkwinkel eingestellt, welcher gegensinnig zu den Lenkwinkeln an der Vorderachse verläuft, so lässt sich neben einem kleineren Wendekreis das Fahrzeug auch verbessert Rangieren bzw. Parkieren. Neben der lenkbaren Hinterachse kann auch eine Vorderachse als steer-by-wire-Lenkung ausgebildet sein.

Nach einem weiteren Aspekt betrifft die Erfindung eine Steuereinheit zur Steuerung eines Aktuators einer steer-by-wire-Lenkung eines Kraftfahrzeugs, wobei die Steuereinheit die folgenden Merkmale aufweist:
- eine Schnittstelle zum Erfassen einer Geschwindigkeit, welche eine momentane Geschwindigkeit des Kraftfahrzeugs repräsentiert,
- eine weitere Schnittstelle zum Erfassen einer Lenkwinkelanforderung, welche eine momentan angeforderte Lenkwinkeländerung aufgrund eines Fahrerwunsches oder einer weiteren von einer Steuereinheit bestimmten Änderung eines Lenkwinkels repräsentiert,
- eine Einheit zum Bestimmen eines begrenzten Lenkwinkels, welcher einen momentan maximal möglichen Lenkwinkel in Abhängigkeit von zumindest der momentanen Geschwindigkeit repräsentiert,
- eine Einheit zum Ansteuern des Aktuators zum Einstellen eines Lenkwinkels zumindest eines Rades in Abhängigkeit zumindest der Lenkwinkelanforderung und unter Berücksichtigung des begrenzten Lenkwinkels

Die Steuereinheit ist dabei ebenfalls in der Lage, den begrenzten Lenkwinkel temporär, also zeitweise bzw. für eine bestimmte Zeit oder für eine gewisse Zeitdauer zuzulassen. Neben einer momentanen Lenkwinkeländerung aufgrund eines Fahrerwunsches, also wenn der Fahrer z.B. an einem Lenkrad eine Lenkbewegung einsteuert, kann auch mittels einer Steuereinheit, wie zum Beispiel einem elektronischen Stabilitätsprogramm (ESP), eine Lenkwinkelanforderung eingesteuert werden.

Die Steuereinheit kann hierbei ein Steuergerät sein, welches beispielsweise ein elektrisches Gerät sein kann, das elektrische Signale, beispielsweise Sensorsignale verarbeitet und in Abhängigkeit davon Steuersignale ausgibt. Die Vorrichtung kann eine oder mehrere geeignete Schnittstellen aufweisen, die hard- und/oder softwaremäßig ausgebildet sein können. Bei einer hardwaremäßigen Ausbildung können die Schnittstellen beispielsweise Teil einer integrierten Schaltung sein, in der Funktionen der Vorrichtung umgesetzt sind. Die Schnittstellen können auch eigene, integrierte Schaltkreise sein oder zumindest teilweise aus diskreten Bauelementen bestehen. Bei einer softwaremäßigen Ausbildung können die Schnittstellen Softwaremodule sein, die beispielsweise auf einem Mikrocontroller neben anderen Softwaremodulen vorhanden sind.

Von Vorteil ist auch ein Computerprogramm-Produkt mit Programmcode, der auf einem maschinenlesbaren Träger wie einem Halbleiterspeicher, einem Festplattenspeicher oder einem optischen Speicher gespeichert sein kann und zur Durchführung des Verfahrens nach einer der vorstehend beschriebenen Ausführungsformen verwendet wird, wenn das Programm auf einem Computer oder einer Steuereinheit ausgeführt wird.

Die Erfindung wird nachfolgend anhand bevorzugter Ausführungsformen unter Bezugnahme auf die Zeichnung beschrieben. In der Zeichnung zeigen:
- Fig. 1: ein Fahrzeug mit einer steer-by-wire-Lenkung nach dem bekannten Stand der Technik und
- Fig. 2: ein Ablaufdiagramm zum Verfahren
- Fig. 3: ein Schaubild einer Ausführung des Verfahrens

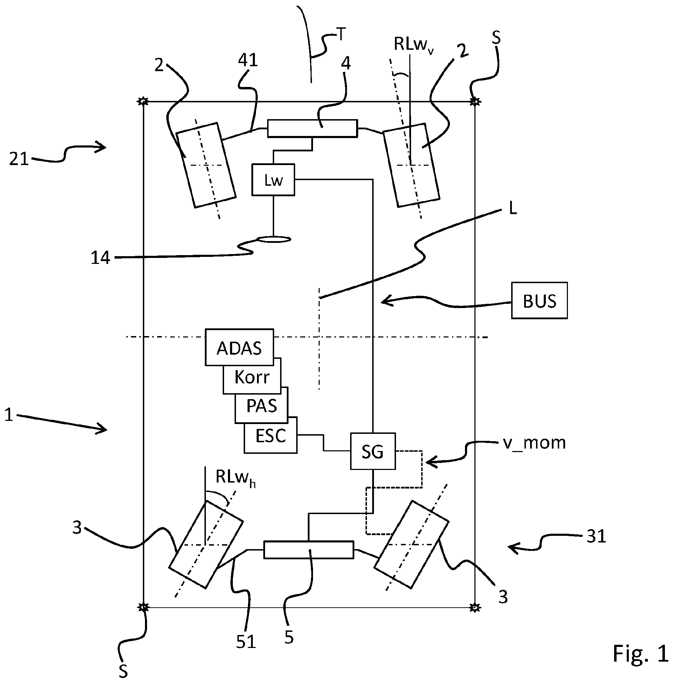

Figur 1 zeigt schematisch ein Fahrzeug 1 mit einer lenkbaren Vorderachse 21 und einer lenkbaren Hinterachse 31. Zum Lenken der Räder 2 an der Vorderachse 21 ist eine steer-by-wire-Lenkung 4 vorgesehen, welche die Räder 2 über ein Lenkgestänge 41 den Radlenkwinkel RLwᵥ an der Vorderachse einstellen bzw. ändern kann. Dieser Winkel RLwᵥ ist vorne am rechten Rad 2 in der Figur 1 beispielhaft eingezeichnet. An der Hinterachse 31 sorgt eine steer-by-wire-Lenkung 5 über ein Lenkgestänge 51 für das Einstellen bzw. Ändern der Radlenkwinkel RLwₕ an den hinteren Rädern 3, gezeigt an dem hinteren linken Rad 3. Als Teil der steer-by-wire-Lenkung ist jeweils ein (nicht dargestellter) Aktuator vorgesehen, welcher eine Kraft aufbringen kann, um eine Lenkstange bzw. Spindel linear zu bewegen, welche über die Lenkgestänge 41, 51 mit den Rädern 2, 3 zu deren Lenkung zusammenwirkt. In der gezeigten Ausführung sind die Räder an der Vorderachse 21 und der Hinterachse 31 gegensinnig gelenkt, so dass sich bei einer niedrigen Geschwindigkeit von z.B. kleiner 5 km/h vorteilhaft ein reduzierter Wendekreis und eine verbesserte Rangier- und Parkiermöglichkeit ergibt gegenüber Fahrzeugen, welche lediglich eine gelenkte Achse aufweisen. Auch lassen sich mit zwei gelenkten Achsen vorteilhaft automatisierte Fahrten ausführen, da das Fahrzeug auf kleinerem Raum manövriert werden kann. Die Einstellung des Lenkwinkels an der Vorderachse 21 erfolgt grundsätzlich über ein Lenkrad 14, wobei der vom Fahrer gewünschte Lenkwinkel mittels einer Sensoreinheit Lw von einer Steuereinheit SG erfasst und über eine Signalleitung an die steer-by-wire-Lenkung 4 geleitet wird. Die Steuereinheit errechnet aus der vom Fahrer eingebrachten Lenkwinkelanforderung Lw_req in Abhängigkeit der Fahrsituation (Beladung, Fahrzeuggeschwindigkeit, Fahrzeugbeschleunigung, Giergeschwindigkeit R_{G}, etc.) den Lenkwinkel RLwᵥ, RLwₕ für die Vorderachse und die Hinterachse und gibt die Steuersignale an die Steer-by-wire-Lenkungen 4, 5 aus, welche die entsprechenden Lenkwinkel an den Achsen 21, 31 einstellt.

Die Steuereinheit SG ist mittels hier schematisch gezeigten Signalleitungen mit den steer-by-wire-Lenkungen 4, 5 verbunden, welche die von der Steuereinheit SG errechneten Lenkwinkel RLwᵥ, RLwₕ einstellt. Die nicht dargestellten Sensoreinheiten zur Übermittlung des jeweiligen Lenkwinkels RLwᵥ, RLwₕ der Räder 2, 3 sind über ein Bussystem BUS mit der Steuereinheit SG und mit den steer-by-wire-Lenkungen 4, 5 elektrisch verbunden. Das Bussystem ist beispielsweise ein CAN-Bus oder auch ein Flexray Bus o.ä. Bussystem, welche bei Fahrzeugen zur Daten - und Signalübertragung eingesetzt wird. Über das Bussystem BUS sind Lenkfunktionen für ein Fahrerassistenzsystem wie autonomes Fahren ADAS, Korridorfunktionen Korr zur Begrenzung eines maximalen Lenkwinkels in Abhängigkeit von Fahrsituationen, ein Parkierassistent PAS zum unterstützten oder automatisierten Parkieren oder auch eine elektronische Stabilitätskontrolle ESC etc. elektrisch mit der Steuereinheit SG mit den steer-by-wire-Lenkungen 4, 5 der Vorderachse 21 und der Hinterachse 31 verbunden. Die Steuereinheit SG ist schematisch dargestellt und gibt als zentrale Einheit Steuersignale an die steer-by-wire-Lenkungen 4, 5 aus, welche die Lenkwinkeländerungen ausführen bzw. den Lenkwinkel RLwᵥ, RLwₕ einstellen.

An den Enden des Fahrzeugs 1 sind Sensoren S angeordnet, die einer Sensorik zugeordnet sind und welche zur Fahrzeugumfelderkennung dienen. Es kann sich hierbei um Temperatursensoren oder um optische Sensoren, die beispielsweise eine Kamera umfassen, oder auch um LiDAR oder Radar handeln, die zur Temperatur-, Abstands- oder auch optischen Erfassung, beispielsweise der Fahrbahn, geeignet sind. Es können somit Umfeldbedingungen, wie Feuchtigkeit oder die Fahrbahn und auch deren Temperatur etc. erfasst und dem Steuergerät SG zugeführt werden. Das Fahrzeug folgt einer Trajektorie T, die in der Figur 1 am vorderen Ende des Fahrzeugs in dessen Fahrtrichtung schematisch dargestellt ist.

Um die Räder 2, 3 des Fahrzeugs 1 mittels der jeweiligen steer-by-wire-Lenkung 4, 5 um ihre Hochachsen im Sinne einer Lenkbewegung zu drehen, muss die Reibung der Reifen der Räder 2, 3 gegenüber der Fahrbahn überwunden werden. Je geringer die Geschwindigkeit des Fahrzeuges, je geringer bewegen sich bzw. rollen auch die Räder 2, 3 in die beabsichtigte Fahrtrichtung auf der Fahrbahn. Bei dem dargestellten Fahrzeug 1 lastet dessen Gewichtskraft auf den vier dargestellten Rädern 2, 3 bzw. der Reifen. Der Kontakt zwischen Reifen und Fahrbahn ergibt sich aus dessen Reifenaufstandsfläche. Aufgrund des Reifenwerkstoffes, in der Regel zum Großteil Gummi, und der Fahrbahnbeschaffenheit ergibt sich eine Reibung der Reifen gegenüber der Fahrbahn. Je geringer die Geschwindigkeit des Fahrzeuges ist, umso mehr Kraft wird zur Lenkung der Räder 2, 3 benötigt, weil die Reibung mit abnehmender Geschwindigkeit zunimmt. Siehe hierzu auch die ausführliche Erläuterung oben.

Wird nun ein Rad 2, 3 an der lenkbaren Hinterachse aus einer nicht dargestellten Position parallel zur Längsachse L des Fahrzeuges 1 wie dargestellt nach rechts um einen Winkel RLwₕ gelenkt, und ist dabei die Geschwindigkeit des Fahrzeuges in einem Bereich vom Stillstand bis etwa 1 km/h (Geschwindigkeit v_0-1), so baut sich in dem Reifen gegenüber der Fahrbahn eine Vorspannung auf. Der Reifenwerkstoff ist elastisch und wird quasi gegenüber der Fahrbahn aufgezogen. Des Weiteren können sich Vorspannungen aufgrund der Elastizitäten in den Lenkgestängen 41, 51 sowie der nicht dargestellten Gelenke ergeben. Wird nun nach einer Auslenkung der Räder 3 an der Hinterachse 31 nach rechts entgegengesetzt zurückgelenkt, so ergibt sich für die steer-by-wire-Lenkung 5 an der Hinterachse 31 ein Kraftrichtungswechsel. Ein Lenkgetriebe des Aktuators der steer-by-wire-Lenkung 5 erfährt beim Zurücklenken zumindest kurzzeitig eine Entlastung und dann wieder eine starke Belastung aufgrund der benötigten bzw. zu erzeugenden Kraft für das Zurücklenken. Je größer dabei der geforderte Lenkwinkel und je geringer die Geschwindigkeit, desto größer wird die sich ergebende Vorspannung. Hierdurch können zum Beispiel im Aktuator der steer-by-wire-Lenkung Schwingungen und thermische Belastungen auftreten, welche letztlich schadhaft für den Aktuator sein können.

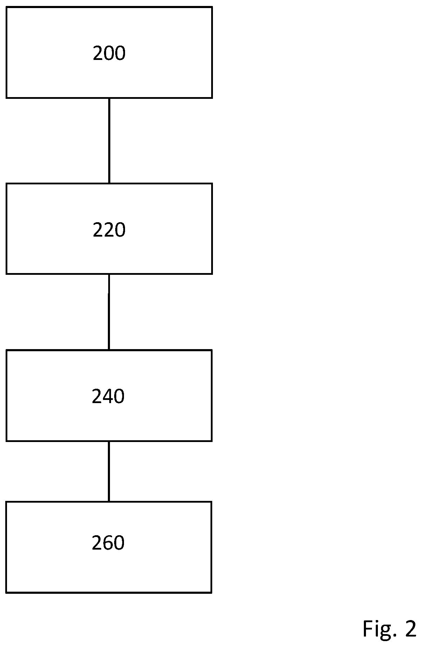

Um das Fahren bei der Geschwindigkeit v_0-1 komfortabler und sicherer zu gestalten und die vorgenannten Vorspannungen zu reduzieren wird der Lenkwinkel der Räder an der jeweiligen Achse begrenzt. Zur Erfassung der derzeitigen Geschwindigkeit erfasst das Steuergerät SG fortwährend, vorzugsweise in Intervallen von 10ms, die momentane Geschwindigkeit v_mom des Fahrzeuges. Dieses ist in Figur 1 mit einer strichlierten Linie zwischen dem Steuergerät SG und dem rechten hinteren Rad 3 beispielhaft gezeigt. Aus Figur 2 geht hervor, wie ein Verfahren zum Betreiben eines Aktuators einer steer-by-wire-Lenkung eines Kraftfahrzeuges ausgeführt werden kann, um einen verträglichen Lenkwinkel als begrenzten Lenkwinkel zu bestimmen. Das Verfahren umfasst einen Schritt des Erfassens 200 einer momentanen Geschwindigkeit v_mom des Kraftfahrzeugs 1 welcher, wie vorgenannt, zur Ermittlung der momentan gefahrenen Geschwindigkeit v_mom dient. Fährt das Fahrzeug mit einer Geschwindigkeit v_0-1, bevorzugt 0 < v_₀₋₁ < 0,7 km/h, so wird in einem Schritt des Bestimmens 220 eines begrenzten Lenkwinkels RLw_lim_mom dieser zumindest in Abhängigkeit von der momentanen Geschwindigkeit v_mom begrenzt. Im Schritt des Bestimmens können weitere Parameter einfließen, so zum Beispiel die Beschaffenheit der Fahrbahn, welche anhand von Sensoren s aus dem Umfeld des Fahrzeugs während der Fahrt ermittelt werden können. Wird in einem weiteren Schritt des Erfassens 240 eine Lenkwinkelanforderung Lw_req erfasst, welche aufgrund eines Fahrerwunsches oder aber eines Steuersignals des Steuergerätes SG erfasst wird, so ist der in dem Steuergerät SG gespeicherte begrenzte Lenkwinkel RLw_lim_mom maßgeblich, sodass kein größerer Lenkwinkel gestellt werden kann. In dem Steuergerät SG kann beispielsweise eine Kennlinie hinterlegt sein, sodass anhand dieser der begrenzte Lenkwinkel in Abhängigkeit von verschiedenen Stufen der Geschwindigkeit abgerufen werden kann. In einem weiteren Schritt des Ansteuerns des Aktuators wird nun an den Rädern 2,3 der betreffenden Achse 21, 31 ein Lenkwinkel RLwᵥ, RLwₕ in Abhängigkeit der Lenkwinkelanforderung Lw_req und unter Berücksichtigung des begrenzten zuvor bestimmten Lenkwinkels RLw_lim_mom eingestellt. Verbleibt das Fahrzeug in dem Geschwindigkeitsbereich v_0-1, so gilt als maximal möglicher Lenkwinkel der zur vor bestimmte begrenzte Lenkwinkel RLw_lim_mom. Während dieser Geschwindigkeit v_0-1 kann der einstellbare Lenkwinkel RLwᵥ, RLwₕ einen Wert von 0° bis zu dem bestimmten begrenzten Lenkwinkel RLw_lim_mom einnehmen.

Oberhalb des vorgenannten Geschwindigkeitsbereiches v_0-1 wird der begrenzte Lenkwinkel RLw_lim_mom aufgehoben und es kann der maximal konstruktiv festgelegte oder ein aufgrund der Fahrzeugsituation begrenzt möglicher Lenkwinkel eingestellt werden. Eine starke Beladung eines Fahrzeuges kann bspw. eine solche Fahrzeugsituation darstellen, bei der die Räder tief in die Radhäuser eintauchen und aufgrund dessen der konstruktiv festgelegte maximale Lenkwinkel nicht einstellbar ist, weil es sonst zu Kollisionen mit dem Fahrzeugaufbau oder dem Fahrwerk kommen könnte.

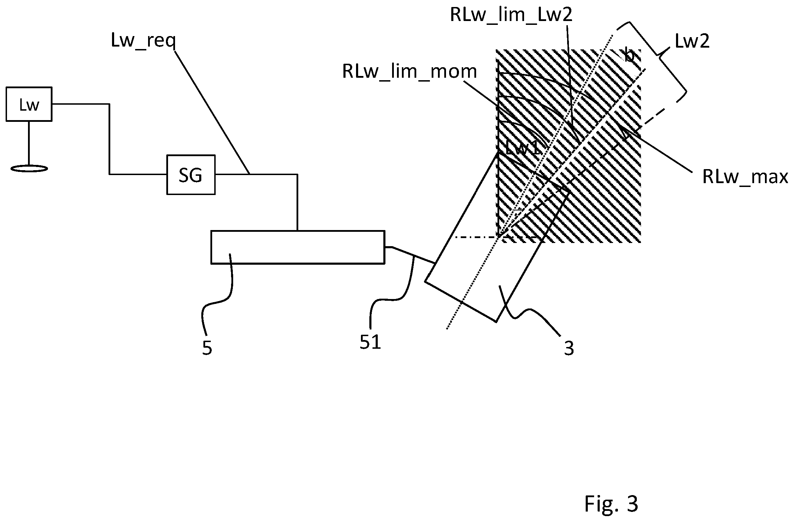

Figur 3 zeigt ein Schaubild, welches den zuvor beschriebenen Zusammenhang im Detail darstellt. Gezeigt ist ein Ausschnitt einer Hinterachslenkung gemäß Figur 1, wobei eine steer-by-wire-Lenkung 5 über ein Lenkgestänge 51 mit einem Rad 3 zu dessen Lenkung gekoppelt ist. Das Rad 3 ist nach rechts gelenkt bis zu einem Lenkwinkel, welcher als begrenzter Lenkwinkel RLw_lim_mom in Abhängigkeit von der momentanen Geschwindigkeit v_mom bestimmt wurde und welche in dem Geschwindigkeitsbereich v_0-1 lag. Aufgrund einer erneuten Lenkwinkelanforderung Lw_req, welche aufgrund eines Fahrerwunsches oder aufgrund der Berechnung des Steuergerätes des SG angefordert wurde, kann nun während dem Verbleib in dem vorgenannten Geschwindigkeitsbereich v_0-1 jeder Lenkwinkel in dem Bereich Lw1 eingestellt werden. Der Bereich Lw1 reicht von der Geradeausfahrt (Mittenposition 0°) bis zu dem begrenzten Lenkwinkel RLw_lim_mom. Analog gilt dieses für eine hier nicht betrachtete, jedoch mögliche Lenkbewegung nach links.

Fährt das Fahrzeug oberhalb des genannten Geschwindigkeitsbereiches (0,7 <= v1), so kann jeder Lenkwinkel im Bereich Lw2, also bis hin zum maximal möglichen Lenkwinkel RLw_max eingestellt werden, falls die Fahrzeugsituation, zum Beispiel aufgrund der Beladung des Fahrzeuges, dieses zulässt.

In einer besonderen Ausführungsform kann das Fahrzeug zunächst mit einer höheren Geschwindigkeit (0,7 <= v₁), also außerhalb des Geschwindigkeitsbereiches v_0-1 bewegt worden sein, sodass der zuvor gespeicherte begrenzte Lenkwinkel RLw_lim_mom aufgehoben wurde. Wird das Fahrzeug nun wieder langsamer, kehrt also in den Geschwindigkeitsbereich v_0-1 zurück, so wird der größte zuletzt eingestellte und gespeicherte Lenkwinkel RLw_rec_Lw2, welcher zwischen RLw_lim_mom und RLw_max liegen kann, als neuer begrenzter Lenkwinkel RLw_lim_Lw2 festgelegt und im Steuergerät gespeichert. Liegt eine Lenkwinkelanforderung Lw_req nun oberhalb des Lenkwinkels RLw_lim_mom, so kann jeder Wert im Bereich b zwischen RLw_lim_mom und RLw_lim_Lw2 eingestellt werden. Dieses ist unproblematisch, weil bei der Bewegung des Fahrzeuges mit (0,7 <= v₁) sich keine relevante Vorspannung in Reifen oder Lenkern, Lager oder Lenkgestänge aufgebaut hat.

Wird ein Kraftfahrzeug bspw. bei einem Parkiervorgang in dem Geschwindigkeitsbereich v_0-1 bewegt und es ist aufgrund dieser sehr niedrigen Geschwindigkeit ein begrenzter Lenkwinkel RLw_lim_mom auf 7° gespeichert worden und hat sich aufgrund der folgenden Fahrzeugbewegung mit v1 >= 0,7 km/h ein größter Lenkwinkel von 8° ergeben, so wird dieser Wert im Steuergerät als RLw_rec_Lw2 gespeichert. Wird darauf folgend in den Geschwindigkeitsbereich v_0-1 zurückgekehrt und gilt somit für RLw_lim_mom ein begrenzter Lenkwinkel von 7°, so kann aufgrund einer erneuten Lenkwinkelanforderung maximal ein Lenkwinkel zwischen RLw_lim_mom und RLw_lim_Lw 2, also ein Lenkwinkel zwischen 7° bis maximal 8° eingestellt werden.

### Bezugszeichen

- 1: (Kraft-) Fahrzeug
- 2: Vorderrad
- 3: Hinterrad
- 4: steer-by-wire-Lenkung
- 5: steer-by-wire-Lenkung
- 14: Lenkrad
- 21: Vorderachse
- 31: Hinterachse
- 41: Lenkgestänge
- 51: Lenkgestänge
- 200: Schritt des Erfassens
- 220: Schritt des Bestimmens
- 240: Schritt des Erfassens
- 260: Schritt des Ansteuerns

- ADAS: Fahrerassistenzsystem autonomes Fahren
- b: Bereich
- BUS: Bussystem
- ESC: Elektronische Stabilitäts Kontrolle
- Korr: Korridorfunktion
- Lw: Sensoreinheit
- Lw_req: Lenkwinkelanforderung
- Lw1: erster Lenkwinkelbereich
- Lw2: zweiter Lenkwinkelbereich
- PAS: Parkierassistent
- RLwᵥ: (Rad-) Lenkwinkel vorne
- RLwₕ: (Rad-) Lenkwinkel vorne
- RLw_lim_mom: begrenzter Lenkwinkel
- RLw_lim_Lw2: begrenzter Lenkwinkel
- RLw_rec_Lw2: begrenzter Lenkwinkel
- RLw_max: maximal möglicher Lenkwinkel
- SG: Steuergerät, Steuereinheit
- S: Sensorik
- T: Trajektorie
- v_0-1: erster Geschwindigkeitsbereich
- v1: erste Geschwindigkeit
- v_mom: momentane Geschwindigkeit

## Patentansprüche

1. Verfahren zum Betreiben eines Aktuators einer steer-by-wire-Lenkung eines Kraftfahrzeugs (1) bei einer Geschwindigkeit vom Stillstand bis zum Parkieren und/oder Rangieren, wobei das Verfahren folgende Schritte aufweist:
- Erfassen einer momentanen Geschwindigkeit (v_mom) des Kraftfahrzeugs
- Bestimmen eines begrenzten Lenkwinkels (RLw_lim_mom) in Abhängigkeit von zumindest der momentanen Geschwindigkeit (v_mom)
- Erfassen einer Lenkwinkelanforderung (Lw_req)
- Ansteuern des Aktuators zum Einstellen eines Lenkwinkels (RLwᵥ, RLwₕ) zumindest eines Rades zumindest in Abhängigkeit der Lenkwinkelanforderung (Lw_req) und unter Berücksichtigung des begrenzten Lenkwinkels (RLw_lim_mom), so dass Belastungen innerhalb des Aktuators aufgrund eines Aufbaus einer Vorspannung zwischen Reifen und Fahrbahn und/oder zwischen Aktuator und einem Lenkgestänge reduziert werden.

2. Verfahren nach Anspruch 1, **dadurch gekennzeichnet, dass** im Schritt des Bestimmens der begrenzte Lenkwinkel (RLw_lim_mom) auf einen Wert kleiner einem vordefinierten maximalen Lenkwinkel (RLw_max) geändert werden kann.

3. Verfahren nach einem der vorhergehenden Ansprüche, **dadurch gekennzeichnet, dass** im Schritt des Bestimmens der begrenzte Lenkwinkel (RLw_lim_mom) aufgrund einer Kennlinie, vorzugsweise auf 50 bis 80%, höchst vorzugsweise auf 70% des vordefinierten maximalen Lenkwinkels (RLw_max) festgelegt wird.

4. Verfahren nach einem der vorhergehenden Ansprüche, **dadurch gekennzeichnet, dass** im Schritt der Bestimmens des begrenzten Lenkwinkels (RLw_lim_mom) ein erster Lenkwinkelbereich (Lw1) von 0° bis kleiner oder gleich des begrenzten Lenkwinkels (RLw_lim_mom) und ein zweiter Lenkwinkelbereich (Lw2) größer des begrenzten Lenkwinkels (RLw_lim_mom) bis zu dem vordefinierten maximalen Lenkwinkel (RLw_max) festgelegt wird, wobei bei einer Geschwindigkeit des Kraftfahrzeugs in einem erstem Geschwindigkeitsbereich (v_0-1) vom Stillstand bis zu einer ersten Geschwindigkeit (v1), vorzugsweise 0,5 bis 1 km/h, höchst vorzugsweise 0,7km/h, der einzustellende Lenkwinkel (RLwᵥ, RLwₕ) jeden Wert in dem ersten Lenkwinkelbereich (Lw1) annehmen kann.

5. Verfahren nach Anspruch 4, **dadurch gekennzeichnet, dass** nach einer Fahrt mit einer Geschwindigkeit größer der ersten Geschwindigkeit (v1) und darauf folgender Rückkehr und Verbleib in dem ersten Geschwindigkeitsbereich (v_0-1) der zuletzt eingestellte Lenkwinkel (RLw_rec_Lw2) aus dem zweiten Lenkwinkelbereich (Lw2) als neuer begrenzter Lenkwinkel (RLw_lim_Lw2) festgelegt wird.

6. Verfahren nach Anspruch 5, **dadurch gekennzeichnet, dass** nach Rücckehr und Verbleib in den ersten Geschwindigkeitsbereich (v_0-1) und einer erneuten Lenkwinkelanforderung (Lw_req) größer 50 bis 80%, vorzugsweise größer 70% des vordefinierten maximalen Lenkwinkels (RLw_max), maximal ein Lenkwinkel im Bereich von 50 bis 80%, vorzugsweise 70% des vordefinierten maximalen Lenkwinkels (RLw_max) bis zum beibehaltenen begrenzten Lenkwinkel (RLw_lim_Lw2) eingestellt werden kann.

7. Verfahren nach einem der vorhergehenden Ansprüche von 4 bis 6, **dadurch gekennzeichnet, dass** bei einer Geschwindigkeit größer der ersten Geschwindigkeit (v1) der begrenzte Lenkwinkel (RLw_lim_mom, RLw_lim_Lw2) aufgehoben wird, so dass nach Erfassen der Lenkwinkelanforderung (Lw_req) im Schritt des Ansteuerns des Aktuators ein Lenkwinkel (RLwᵥ, RLwₕ) bis zum vordefinierten maximalen Lenkwinkel (RLw_max) eingestellt werden kann.

8. Verfahren nach einem der vorhergehenden Ansprüche, **dadurch gekennzeichnet, dass** das Einstellen eines neuen Lenkwinkels (RLwᵥ, RLwₕ) ausgehend von dem zuvor eingestellten Lenkwinkel in Abhängigkeit von der momentanen Geschwindigkeit (v_mom) und der Lenkwinkelanforderung (Lw_req), bevorzugt anhand einer Kennlinie, allmählich vorgenommen wird, um eine sprunghafte Lenkwinkeländerung zu verhindern.

9. Verfahren nach einem der vorhergehenden Ansprüche, **dadurch gekennzeichnet, dass** in Abhängigkeit von der momentanen Geschwindigkeit (v_mom) im Schritt des Bestimmens des begrenzten Lenkwinkels (RLw_lim_mom) eine Beschleunigung einer Antriebseinheit des Aktuators, zumindest temporär geändert, vorzugsweise reduziert wird.

10. Steer-by-wire-Lenkung mit einem Aktuator, vorzugsweise Hinterachslenkung, welche nach einem Verfahren gemäß der vorhergehenden Ansprüche betrieben wird.

11. Steuereinheit (SG) zur Steuerung eines Aktuators einer steer-by-wire-Lenkung (4, 5) eines Kraftfahrzeugs (1), wobei die Steuereinheit die folgenden Merkmale aufweist:
• eine Schnittstelle zum Erfassen einer Geschwindigkeit (v_mom), welche eine momentane Geschwindigkeit des Kraftfahrzeugs repräsentiert,
• eine weitere Schnittstelle zum Erfassen einer Lenkwinkelanforderung (Lw_req), welche eine momentane Lenkwinkeländerung aufgrund eines Fahrerwunsches oder aufgrund einer weiteren von einer Steuereinheit (SG) bestimmten Änderung eines Lenkwinkels repräsentiert,
• eine Einheit zum Bestimmen eines begrenzten Lenkwinkels (RLw_lim_mom), welcher einen momentan maximal möglichen Lenkwinkel repräsentiert,
• eine Einheit zum Ansteuern des Aktuators zum Einstellen eines Lenkwinkels (RLwᵥ, RLwₕ) zumindest eines Rades in Abhängigkeit zumindest der Lenkwinkelanforderung (Lw_req) und unter Berücksichtigung des begrenzten Lenkwinkels (RLw_lim_mom), so dass Belastungen innerhalb des Aktuators aufgrund eines Aufbaus einer Vorspannung zwischen Reifen und Fahrbahn und/oder zwischen Aktuator und einem Lenkgestänge reduziert werden.

12. Computerprogramm, das dazu eingerichtet ist, das Verfahren gemäß einem der vorhergehenden Ansprüche von 1 bis 9 auszuführen.

13. Maschinenlesbares Speichermedium, auf dem das Computerprogramm nach Anspruch 12 gespeichert ist.

## Claims

1. Method for operating an actuator of a steer-by-wire steering system of a motor vehicle (1) at a speed from a standstill to parking and/or manoeuvring, wherein the method comprises the following steps:
- detecting a current speed (v_mom) of the motor vehicle
- determining a limited steering angle (RLw_lim_mom) depending on at least the current speed (v_mom)
- detecting a steering angle requirement (Lw_req)
- activating the actuator to set a steering angle (RLwᵥ, RLwₕ) of at least one wheel at least depending on the steering angle requirement (Lw_req) and taking into account the limited steering angle (RLw_lim_mom), so that loads within the actuator due to a build-up of prestress between tyre and roadway and/or between actuator and a steering linkage are reduced.

2. Method according to Claim 1, **characterized in that**, in the determining step, the limited steering angle (RLw_lim_mom) can be changed to a value lower than a predefined maximum steering angle (RLw_max).

3. Method according to either of the preceding claims, **characterized in that**, in the determining step, the limited steering angle (RLw_lim_mom) is defined based on a characteristic curve, preferably at 50 to 80%, most preferably at 70%, of the predefined maximum steering angle (RLw_max).

4. Method according to any of the preceding claims, **characterized in that**, in the step of determining the limited steering angle (RLw_lim_mom), a first steering angle range (Lw1) from 0° to less than or equal to the limited steering angle (RLw_lim_mom) and a second steering angle range (Lw2) of greater than the limited steering angle (RLw_lim_mom) up to the predefined maximum steering angle (RLw_max) are defined, wherein, at a speed of the motor vehicle in a first speed range (v_0-1) from a standstill to a first speed (v1), preferably 0.5 to 1 km/h, most preferably 0.7 km/h, the steering angle (RLwᵥ, RLwₕ) to be set can assume any value in the first steering angle range (Lw1).

5. Method according to Claim 4, **characterized in that**, following the motor vehicle travelling at a speed of greater than the first speed (v1) and subsequently returning to and remaining in the first speed range (v_0-1), the last-set steering angle (RLw_rec_Lw2) from the second steering angle range (Lw2) is defined as the new limited steering angle (RLw_lim_Lw2).

6. Method according to Claim 5, **characterized in that**, following the motor vehicle returning to and remaining in the first speed range (v_0-1) and a renewed steering angle requirement (Lw_req) of greater than 50 to 80%, preferably greater than 70%, of the predefined maximum steering angle (RLw_max), a steering angle in the range of 50 to 80%, preferably 70%, of the predefined maximum steering angle (RLw_max) up to the maintained limited steering angle (RLw_lim_Lw2) can be set as a maximum.

7. Method according to any of the preceding Claims 4 to 6, **characterized in that** the limited steering angle (RLw_lim_mom, RLw_lim_Lw2) is cancelled at a speed greater than the first speed (v1), so that, following detection of the steering angle requirement (Lw_req), a steering angle (RLwᵥ, RLwₕ) up to the predefined maximum steering angle (RLw_max) can be set in the step of activating the actuator.

8. Method according to any of the preceding claims, **characterized in that** setting of a new steering angle (RLwᵥ, RLwₕ) is performed gradually starting from the previously set steering angle depending on the current speed (v_mom) and the steering angle requirement (Lw_req), preferably on the basis of a characteristic curve, in order to prevent a sudden change in steering angle.

9. Method according to any of the preceding claims, **characterized in that** an acceleration of a drive unit of the actuator is at least temporarily changed, preferably reduced, depending on the current speed (v_mom), in the step of determining the limited steering angle (RLw_lim_mom).

10. Steer-by-wire steering system comprising an actuator, preferably rear-axle steering system, which is operated in accordance with a method according to the preceding claims.

11. Control unit (SG) for controlling an actuator of a steer-by-wire steering system (4, 5) of a motor vehicle (1), wherein the control unit has the following features:
• an interface for detecting a speed (v_mom), which represents a current speed of the motor vehicle,
• a further interface for detecting a steering angle request (Lw_req), which represents a current change in steering angle due to a driver's request or due to a further change in a steering angle determined by a control unit (SG),
• a unit for determining a limited steering angle (RLw_lim_mom), which represents a currently maximum possible steering angle,
• a unit for activating the actuator for setting a steering angle (RLwᵥ, RLwₕ) of at least one wheel depending on at least the steering angle requirement (Lw_req) and taking into account the limited steering angle (RLw_lim_mom), so that loads within the actuator due to a build-up of prestress between tyre and roadway and/or between actuator and a steering linkage are reduced.

12. Computer program, which is configured to carry out the method according to any of the preceding Claims 1 to 9.

13. Machine-readable storage medium, on which the computer program according to Claim 12 is stored.

## Revendications

1. Procédé destiné à faire fonctionner un actionneur d'un système de direction par câble d'un véhicule à moteur (1) à une vitesse de l'arrêt jusqu'au stationnement et/ou à la manœuvre, le procédé comportant des étapes suivantes :
- détection d'une vitesse instantanée (v_mom) du véhicule à moteur
- détermination d'un angle de braquage limité (RLw_lim_mom) en fonction au moins de la vitesse instantanée (v_mom)
- détection d'une demande d'angle de braquage (Lw_req)
- pilotage de l'actionneur pour régler un angle de braquage (RLwᵥ, RLwₕ) d'au moins une roue au moins en fonction de la demande d'angle de braquage (Lw_req) et en tenant compte de l'angle de braquage limité (RLw_lim_mom) de manière à réduire des charges à l'intérieur de l'actionneur en raison de l'apparition d'une précontrainte entre le pneu et la chaussée et/ou entre l'actionneur et une tringlerie de direction.

2. Procédé selon la revendication 1, **caractérisé en ce que** dans l'étape de la détermination, l'angle de braquage limité (RLw_lim_mom) peut être modifié sur une valeur inférieure à un angle de braquage maximal prédéfini (RLw_max).

3. Procédé selon l'une des revendications précédentes, **caractérisé en ce que** dans l'étape de la détermination, l'angle de braquage limité (RLw_lim_mom) peut être fixé de préférence sur 50 à 80 %, au maximum de préférence sur 70 % de l'angle de braquage maximal prédéfini (RLw_max) en raison d'une courbe caractéristique.

4. Procédé selon l'une des revendications précédentes, **caractérisé en ce que** dans l'étape de la détermination de l'angle de braquage limité (RLw_lim_mom), une première plage d'angles de braquage (Lw1) de 0 à une valeur inférieure ou égale à l'angle de braquage limité (RLw_lim_mom) et une deuxième plage d'angles de braquage (Lw2) supérieure à l'angle de braquage limité (RLw_lim_mom) jusqu'à l'angle de braquage maximal prédéfini (RLw_max) sont fixées, l'angle de braquage à régler (RLwᵥ, RLwₕ) pouvant prendre n'importe quelle valeur dans la première plage d'angles de braquage (Lw1) à une vitesse du véhicule à moteur dans une première plage de vitesses (v_0-1) de l'arrêt à une première vitesse (v1), de préférence de 0,5 à 1 km/h, au maximum de préférence de 0,7 km/h.

5. Procédé selon la revendication 4, **caractérisé en ce qu'**après un déplacement à une vitesse supérieure à la première vitesse (v1) et un retour et un maintien ultérieurs dans la première plage de vitesses (v_0-1), l'angle de braquage (RLw_rec_Lw2) réglé en dernier lieu à partir de la deuxième plage d'angles de braquage (Lw2) est fixé comme étant le nouvel angle de braquage limité (RLw_lim_Lw2).

6. Procédé selon la revendication 5, **caractérisé en ce qu'**après le retour et le maintien dans la première plage de vitesses (v_0-1) et une demande d'angle de braquage renouvelée (Lw_req) supérieure à 50 à 80 %, de préférence supérieure à 70 % de l'angle de braquage maximal prédéfini (RLw_max), un angle de braquage dans la plage de 50 à 80 %, se préférence de 70 % de l'angle de braquage maximal prédéfini (RLw_max) peut être réglé jusqu'à l'angle de braquage limité conservé (RLw_lim_Lw2).

7. Procédé selon l'une des revendications précédentes 4 à 6, **caractérisé en ce qu'**à une vitesse supérieure à la première vitesse (v1), l'angle de braquage limité (RLw_lim_mom, RLw_lim_Lw2) est annulé de telle sorte qu'après détection de la demande d'angle de braquage (Lw_req) dans de l'étape du pilotage de l'actionneur, un angle de braquage (RLwᵥ, RLwₕ) peut être réglé jusqu'à l'angle de braquage maximal prédéfini (RLw_max).

8. Procédé selon l'une des revendications précédentes, **caractérisé en ce que** le réglage d'un nouvel angle de braquage (RLwᵥ, RLwₕ) est effectué progressivement en partant de l'angle de braquage réglé au préalable en fonction de la vitesse instantanée (v_mom) et de la demande d'angle de braquage (Lw_req), de manière préférée à l'aide d'une courbe caractéristique, afin d'éviter un changement brusque de l'angle de braquage.

9. Procédé selon l'une des revendications précédentes, **caractérisé en ce qu'**en fonction de la vitesse instantanée (v_mom) dans l'étape de la détermination de l'angle de braquage limité (RLw_lim_mom), une accélération d'une unité d'entraînement de l'actionneur est modifiée au moins temporairement, de préférence est réduite.

10. Système de direction par câble avec un actionneur, de préférence un système de direction d'essieu arrière, qui est actionné selon un procédé selon les revendications précédentes.

11. Unité de commande (SG) destinée à commander un actionneur d'un système de direction par câble (4, 5) d'un véhicule à moteur (1), l'unité de commande comportant les caractéristiques suivantes :
• une interface de détection d'une vitesse (v_mom), qui représente une vitesse instantanée du véhicule à moteur,
• une autre interface de détection d'une demande d'angle de braquage (Lw_req), qui représente un changement instantané d'angle de braquage en raison d'une demande du conducteur ou en raison d'un autre changement d'un angle de braquage déterminé par une unité de contrôle (SG),
• une unité de détermination d'un angle de braquage limité (RLw_lim_mom), qui représente un angle de braquage maximal possible pour l'instant,
• une unité de pilotage de l'actionneur pour régler un angle de braquage (RLwᵥ, RLw) d'au moins une roue en fonction d'au moins la demande d'angle de braquage (Lw_req) et prenant en compte l'angle de braquage limité (RLw_lim_mom) de manière à réduire des charges à l'intérieur de l'actionneur en raison de l'apparition d'une précontrainte entre le pneu et la chaussée et/ou entre l'actionneur et une tringlerie de direction.

12. Programme d'ordinateur qui est mis au point pour exécuter le procédé selon l'une des revendications précédentes de 1 à 9.

13. Support de stockage lisible par machine sur lequel est stocké le programme d'ordinateur selon la revendication 12.
